# DEMANDE DE BREVET EUROPEEN

(11) **EP 1 043 485 A1**
(43) Date de publication de la demande: **11.10.2000**
(21) Numéro de dépôt: 00400791.0
(22) Date de dépôt: 22.03.2000
(51) Int. Cl.: F02B 31/08, F02M 21/02

(54) **Procédé et système d'admission d'un melange carburé dans au moins une chambre de combustion d'un moteur à allumage commandé**

(30) Priorité: 09.04.1999 FR 9904936
(71) Demandeur: INSTITUT FRANCAIS DU PETROLE, 92852 Rueil-Malmaison Cedex (FR)
(72) Inventeur: Monnier, Gaétan, 78955 Carrières sous Poissy (FR); Henriot, Stéphane, 94400 Saint Maurice (FR)

(57) **Abrégé**

- La présente invention concerne un système et un procédé d'admission d'un mélange carburé dans au moins une chambre de combustion d'un moteur à combustion interne à allumage commandé fonctionnant en mélange pauvre, comprenant au moins une admission d'air via un premier flux associée à une injection de carburant gazeux via un deuxième flux depuis une tubulure d'admission, à travers au moins une soupape d'admission.
- Conformément à l'invention, l'injection de carburant gazeux est réalisée juste en amont et à proximité (5) du siège de la soupape (3), suivant une direction oblique par rapport au flux d'air et avec une vitesse largement supérieure à celle de l'air de façon à le dévier vers l'extrados de la tubulure et réduire ainsi sa section hydraulique avant sa pénétration la chambre de combustion (2).

## Description

La présente invention concerne le domaine des moteurs à combustion interne à allumage commandé utilisant comme combustible un carburant gazeux tel que le gaz naturel comprimé (GNC) ou liquéfié (GNL) ou le gaz de pétrole liquéfié (GPL).

De façon connue, de tels moteurs comprennent au moins un cylindre dans lequel coulisse un piston selon l'axe du cylindre, une culasse surmontant le cylindre et comprenant au moins une soupape d'admission, l'ensemble délimitant une chambre de combustion.

De façon plus spécifique l'invention s'applique à des moteurs du type précité fonctionnant en mélange pauvre c'est-à-dire avec un mélange air/carburant très dilué, pour lesquels la richesse du mélange est par exemple de l'ordre de 0,6. Le fonctionnement de moteurs à des richesses de cet ordre, permet de réduire considérablement les émissions d'oxydes d'azote (NOx) à l'échappement, tout en améliorant le rendement desdits moteurs. Les températures à l'échappement sont également faibles, et la combustion permet un gain en rendement jusqu'à 10% par rapport aux moteurs fonctionnant à la stoechiométrie. Ce gain en consommation est un atout important en faveur des moteurs dits "à mélange pauvre".

### Etat de la technique

L'état de la technique dans ce domaine peut être illustré notamment par les brevets suivants : EP 719 916, W0 96/12 102, WO 96/28 649, US 5 150 691 ou US 5 673 673.

Les problèmes inhérents au fonctionnement des moteurs à gaz pauvres concernent essentiellement les instabilités de la combustion dus à une mauvaise initiation ou propagation de la flamme. On est alors en effet en limite inférieure d'inflammabilité du mélange.

De ce fait, une augmentation des émissions d'hydrocarbures imbrûlés à l'échappement est constatée.

Pour remédier notamment à ces problèmes (connus) d'instabilité de la combustion en mélange dilué, les motoristes portent une attention particulière à la qualité de la combustion, qui doit être rapide et stable.

Plus précisément, l'optimisation de l'aérodynamique interne se révèle être une étape importante dans la conception d'un moteur à allumage commandé fonctionnant en mélange dilué. La mise au point de cette aérodynamique dépend de deux phénomènes : l'écoulement induit par les conduits d'admission lors de la phase d'introduction des gaz dans le cylindre et l'interaction de l'écoulement ainsi créé avec la chambre de combustion lors de la compression.

Les niveaux de turbulence et de vitesses avant l'allumage doivent notamment être optimisés pour favoriser la stabilité de l'allumage et la propagation de la flamme.

Dans le domaine des moteurs à allumage commandé fonctionnant avec un recyclage des gaz d'échappement à l'admission (EGR), il a été proposé de diriger les gaz recyclés dans une zone spécifique d'un conduit d'admission et de la chambre de combustion afin d'y modifier l'aérodynamique interne : la demande de brevet EP 0 719 916 déposée au nom du demandeur en est un exemple selon lequel une stratification et un contrôle des différents gaz est prévue quelles que soient les conditions de fonctionnement du moteur.

Une solution connue pour augmenter l'aérodynamique interne d'un moteur à piston consiste à injecter le carburant gazeux par un conduit débouchant dans la partie généralement coudée de la ou des tubulure(s) d'admission d'air au voisinage de la soupape, avec une vitesse très supérieure à celle de l'air, de façon à générer lorsque la soupape est ouverte, un jet de carburant gazeux qui pénètre directement dans la chambre de combustion. Cette solution permet d'utiliser la quantité de mouvement du jet de gaz pour modifier ou renforcer le mouvement d'air à l'intérieur du cylindre. Le conduit d'injection de carburant gazeux peut être placé du côté de l'intrados du coude (ayant le plus petit rayon de courbure) mais il doit être recourbé à son extrémité pour que le jet de gaz puisse rentrer directement à l'intérieur du cylindre, Il est cependant placé plus souvent du côté de l'extrados du coude de la tubulure d'admission de façon à viser directement l'intérieur du cylindre sans avoir à utiliser à cet effet un conduit recourbé.

### Le procédé et le système selon l'invention

La présente invention offre une solution pour résoudre les difficultés liées à la stabilité de l'allumage et la propagation de la flamme particulièrement dans le mode de fonctionnement en mélange pauvre en renforçant l'aérodynamique de l'admission d'air carburé afin de créer des conditions favorables à une bonne combustion.

Le procédé selon l'invention d'admission d'un mélange carburé dans au moins une chambre de combustion d'un moteur à combustion interne à allumage commandé, est particulièrement adapté à un fonctionnement en mélange pauvre. Il comprend l'admission, dans une chambre de combustion d'un flux d'air via au moins une tubulure d'admission d'air présentant un coude en amont de la chambre de combustion, relativement au sens du flux d'air, et d'un flux de carburant gazeux ayant une vitesse supérieure à celle du flux d'air. Le carburant gazeux est injecté au voisinage de la chambre de combustion suivant une direction oblique par rapport à la direction du flux d'air et du côté de l'intrados de la tubulure d'admission de façon à dévier le flux d'air carburé vers l'extrados de la tubulure d'admission et réduire sensiblement sa section hydraulique avant sa rentrée dans la chambre de combustion.

Le système d'admission de mélange carburé selon l'invention d'au moins une chambre de combustion d'un moteur à combustion interne à allumage commandé, est particulièrement adapté à un fonctionnement en mélange pauvre. Il comprend au moins une tubulure d'admission d'un premier flux d'air débouchant dans la chambre de combustion par l'intermédiaire d'au moins une soupape d'admission, cette tubulure présentant un coude en amont de la chambre de combustion, relativement au sens du flux d'air, au moins un conduit d'admission d'un flux de carburant gazeux débouchant dans la tubulure d'admission au voisinage de la chambre de combustion. Le conduit d'admission est tel que le flux de carburant gazeux est injecté suivant une direction oblique par rapport à la direction du flux d'air et du côté de l'intrados de la tubulure d'admission de façon à dévier le flux d'air carburé vers l'extrados de la tubulure d'admission et réduire sensiblement sa section hydraulique avant sa rentrée dans la chambre de combustion.

Le système peut comporter jusqu'à trois tubulures d'admission débouchant sensiblement dans le même demi-cylindre et dans une telle configuration, on peut placer un conduit qui débouche dans la tubulure d'admission placée entre les deux autres tubulures ou bien deux conduits qui débouchent dans les tubulures d'admission situées de part et d'autre de la troisième ou bien encore trois conduits chacun débouchant dans une tubulure d'admission.

La tubulure d'admission peut présenter un axe sensiblement hélicoïdal en amont de la chambre de combustion.

L'axe de chaque conduit à proximité de son débouché dans la tubulure d'admission, peut être orienté de façon à diriger les deux flux mélangés tangentiellement dans le cylindre ou bien encore de façon à diriger le carburant gazeux sensiblement parallèlement au plan de sa soupape.

### Présentation des figures

D'autres particularités, détails, avantages de la présente invention apparaîtront mieux à la lecture de la description qui va suivre, faite à titre illustratif et nullement limitatif :
- la Fig 1 est une coupe de côté d'un premier mode de réalisation de l'invention, avec une admission de type "pré-swirl";
- la Fig 2 est une vue de dessus simplifiée du mode de réalisation de la figure 1 ;
- la figure 3 est une vue de côté d'un deuxième mode de réalisation de l'invention, avec une admission du type "swirl tangentiel";
- la Fig 4 est une vue de dessus simplifiée du mode de réalisation selon la figure 3;
- la Fig 5 est une vue de face de deux tubulures d'admission selon un mode de réalisation dit "tumble";
- la Fig 6 est une vue de côté du mode de réalisation selon la figure 5;
- la Fig 7 est un ensemble de courbes donnant le taux de tumble en fonction de l'angle vilebrequin selon l'art antérieur, et selon l'invention ; et
- les Fig. 8 et 9 illustrent les effets d'une injection oblique de gaz dans un conduit d'admission sur la section du flux d'air admis dans un cylindre, pour deux débits d'injection de gaz différents.

### Description détaillée

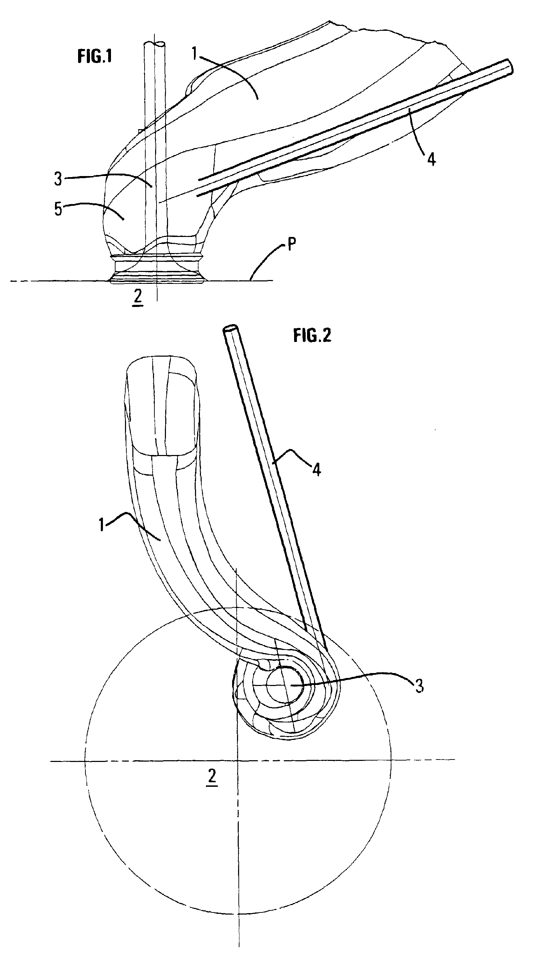

Les figures 1 et 2 concernent donc un mode de réalisation de type «pré-swirl» réalisé dans une tubulure d'admission hélicoïdale 1. La forme hélicoïdale de la tubulure 1 est davantage visible sur la figure 2; cette tubulure véhicule préférentiellement de l'air vers la chambre de combustion 2. Un moyen d'obturation sélective 3 telle qu'une soupape est placé au débouché de la tubulure 1 dans la chambre 2. Un plan dit "de soupape" P définit la limite entre 1 et 2.

Conformément à l'invention, un conduit d'admission en gaz carburant 4 débouche dans la tubulure d'admission 1 au-dessus du plan P et du siège de la soupape 3, au niveau de la volute ou chapelle d'admission 5 (zone de la tubulure d'admission qui entoure la soupape).

Préférentiellement, le conduit 4 débouche tangentiellement dans la chapelle 5 de façon à renforcer l'écoulement tourbillonnant de l'air à ce niveau.

Par ailleurs le conduit 4 est inclinée par rapport au plan P de la soupape 3, selon un angle proche de celui de l'axe de la tubulure principale 1. Autrement dit, au niveau de la chapelle 5, les écoulements provenant respectivement de la tubulure d'admission 1 et du conduit 4 ont le même sens et la même orientation. Le conduit 4 présente avantageusement un diamètre inférieur à celui de la tubulure d'admission 1, et les vitesses d'écoulement y sont bien supérieures. A titre illustratif les vitesses du carburant sont comprisent entre 100 m/s et 300m/s; celles de l'air sont comprises entre 50 et 150 m/s.

Ainsi l'écoulement issu du conduit 4 peut favoriser et renforcer l'écoulement de l'air dans la tubulure d'admission 1. Le mélange ainsi formé dans la chapelle 5 va donc être introduit dans la chambre de combustion 2 avec un fort mouvement tourbillonnant (fort pré-swirl) ce qui va induire un tourbillonnement (swirl) stable et fiable dans la chambre de combustion 2. On renforce ainsi le niveau de "pré-swirl" dans la tubulure d'admission 1 elle-même.

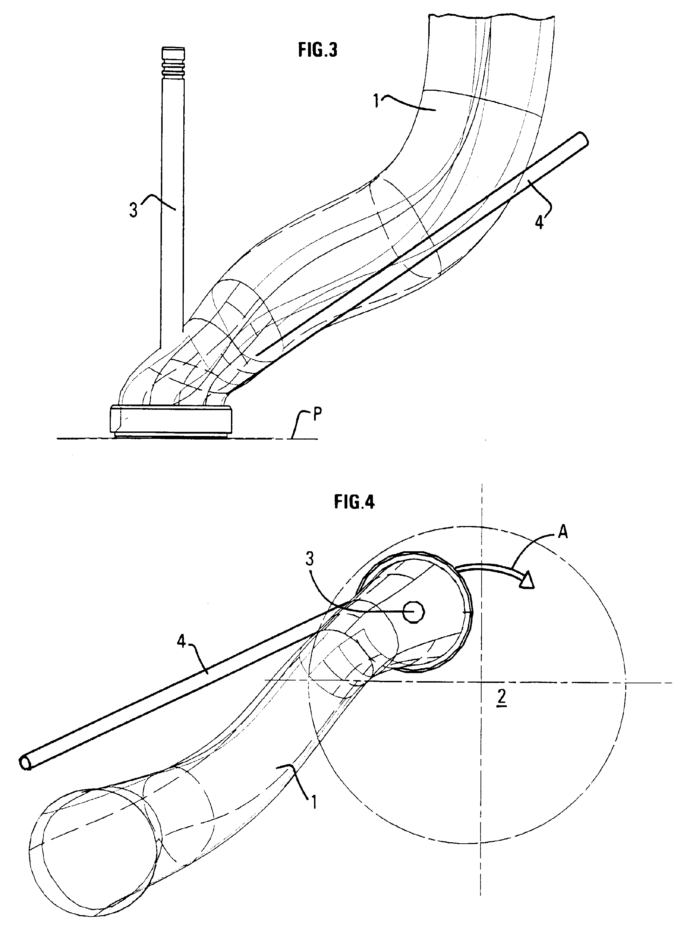

Le mode de réalisation de l'invention illustré par les figures 3 et 4 diffère de celui qui vient d'être décrit par l'orientation de la tubulure d'admission 1 en amont de la chambre de combustion 2. Ici la tubulure d'admission 1 est dite tangentielle car elle arrive sensiblement suivant une tangente au cylindre. Bien entendu, le conduit 4 débouche comme dans le premier mode de réalisation de l'invention, au niveau de la chapelle 5. Là, le flux issu de la tubulure d'admission 1 est parallèle au flux du conduit 4.

Comme il apparaît clairement sur la figure 4, le conduit 4 débouche avantageusement en périphérie de la tubulure d'admission 1, et en périphérie de la chambre de combustion 2. De plus l'axe du conduit 4 est orienté de façon à diriger le flux de gaz vers le cylindre, selon une tangente à celui-ci. Cette disposition renforce l'effet du flux d'air issu de la tubulure d'admission 1, dans cette direction à l'intérieur de la chambre de combustion. La double flèche A de la figure 4 montre le flux dominant. Ainsi on augmente ici l'effet de jet de la tubulure d'admission 1 dite tangentielle.

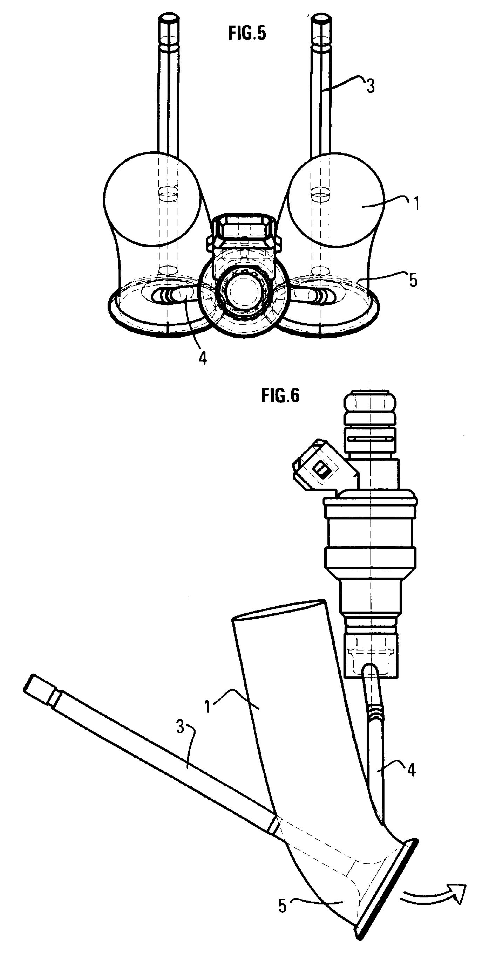

Les figures 5 et 6 montrent un mode de réalisation de l'invention appliqué à un mode d'injection destiné à obtenir dans le cylindre un tourbillon d'air carburé dont l'axe de rotation est parallèle à l'axe du vilebrequin, connu des gens de l'art sous le nom de « tumble ». Ce tourbillon est obtenu au moyen d'au moins une tubulure et de préférence deux tubulures d'admission 1 coudés au voisinage de leur raccordement avec la chambre de combustion, associés chacune avec une soupape d'admission 3. La tubulure d'injection de carburant 4 débouche en oblique dans la chapelle d'admission 5 de chaque conduit d'admission du côté de l'intrados du coude (i.e. présentant le plus faible rayon de courbure) de façon que ce flux latéral dévie le flux d'air arrivant par le conduit 1 vers l'extrados. La vitesse d'injection du carburant est suffisante pour que la section hydraulique du flux d'air soit réduite. Il en résulte une augmentation de la vitesse d'injection dans la chambre du mélange carburé et par conséquent un effet de tourbillon de type « tumble » favorable à son homogénéisation.

L'emplacement de l'intrados où la tubulure 4 débouche dans le conduit d'admission 1 est choisi assez proche du siège de la soupape, de façon à éviter que la section hydraulique du flux dévié, ne se réélargisse avant son entrée dans la chambre de combustion. A cet égard, dans la mesure où la géométrie des chambres et conduits d'admission le permet, on gagne à augmenter l'angle d'inclinaison de la tubulure 4 par rapport au conduit d'admission 1.

Différents agencements sont possibles pour obtenir cet effet dit de "tumble". Il est possible d'avoir trois tubulures d'admission 1 disposés symétriquement et approximativement contenus dans un même demi-cylindre. Partant de là, il est possible de prévoir un, deux ou trois conduits 4 d'admission de gaz carburant. Si un seul conduit est prévu, il débouchera dans la tubulure d'admission 1 disposée entre les deux autres.

Si deux conduits 4 sont envisagés, ils déboucheront respectivement dans les tubulures d'admission 1 situées en périphérie.

Enfin, si trois conduits 4 sont prévus, chacun débouchera dans une tubulure d'admission de la façon indiquée ci-avant.

L'injection de gaz carburant telle que décrite ci-dessus vise à renforcer le niveau de "tumble" en modifiant le flux dès la volute d'admission 5.

Avantageusement, la commande de la pression d'injection du gaz carburant peut être réalisée via la pression initiale d'alimentation du système de dosage et/ou le diamètre de la tubulure 4.

Par ailleurs, la présente invention prévoit une commande du phasage de l'injection de gaz dans le cycle moteur et préférentiellement dans la phase d'admission du cycle à quatre temps.

L'ensemble de ces commandes permet de gérer et de moduler l'effet de la ou des conduits 4, c'est-à-dire l'aérodynamique interne dans chaque chambre de combustion 2.

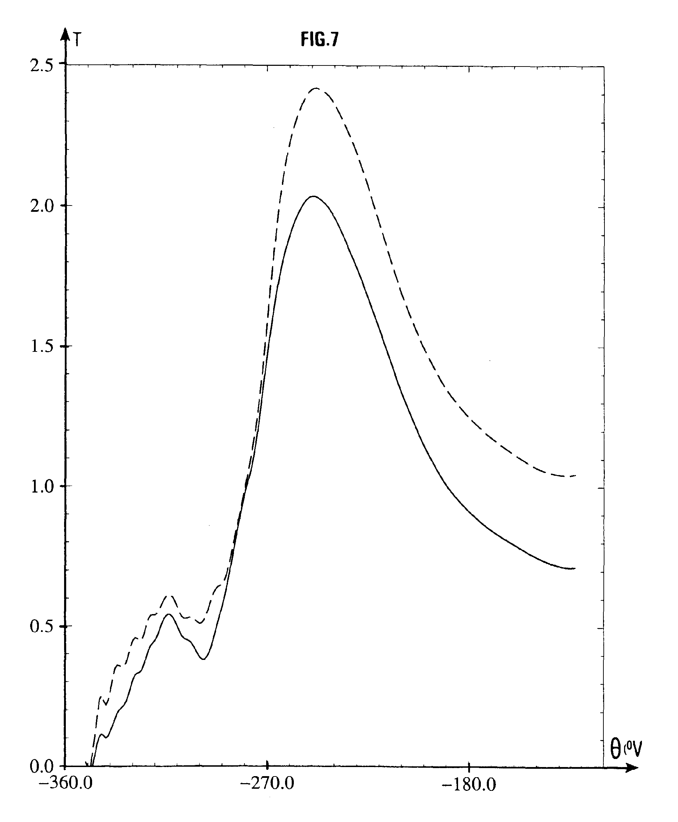

La figure 7 montre précisément l'effet de l'invention vis-à-vis de l'art antérieur, dans le cas du mode d'injection conduisant à l'effet dit "tumble", décrit en relation avec les figures 5 et 6.

Les deux courbes montrent le taux de tumble (T) en fonction de l'angle vilebrequin θ (en degrés vilebrequin).

La courbe en traits pleins indique le niveau de tumble selon l'art antérieur, c'est-à-dire sans tubulure 4 raccordée aux tubulures d'admission 1; la courbe en pointillés a été obtenue conformément à l'invention.

Sur à peu près toute une course de piston, on voit que le taux de « tumble » selon l'invention est supérieur à celui de l'art antérieur. Cet effet est davantage marqué aux environs de -270°V et au-delà. Le gain est alors de presque 50 %, ce qui est considérable. L'aérodynamique est par conséquent largement optimisé selon l'invention de sorte qu'une combustion plus stable et une meilleure initiation et propagation de la flamme sont obtenues.

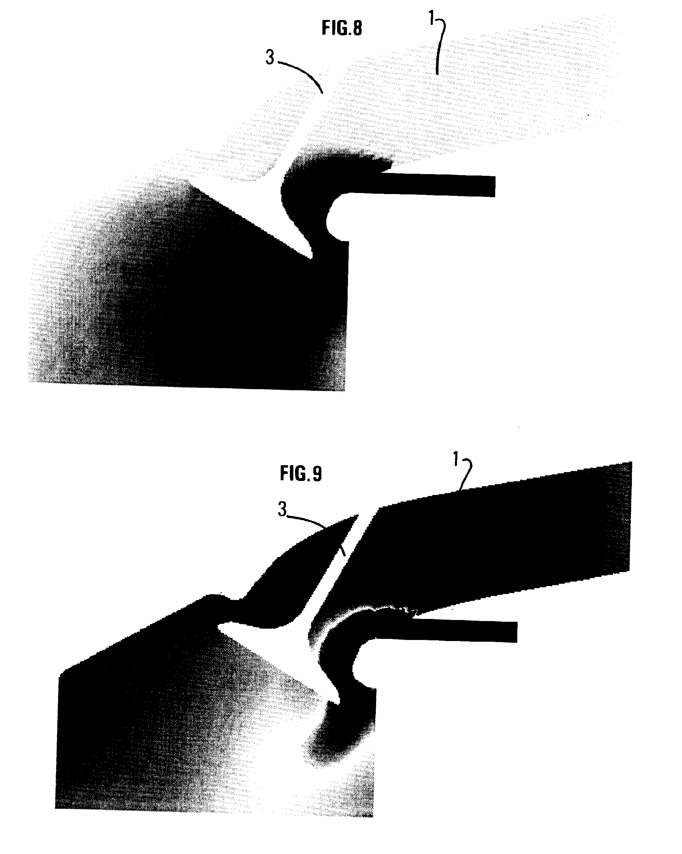

Sur les Fig.8, 9, on voit que l'injection de carburant par le conduit oblique latéral 4, réduit la section hydraulique du flux d'air arrivant par la tubulure 1, qui se trouve rejeté vers l'extrados de celle-ci.

## Revendications

1. Procédé d'admission d'un mélange carburé dans au moins une chambre de combustion (2) d'un moteur à combustion interne à allumage commandé fonctionnant en mélange pauvre, comprenant l'admission, dans une chambre de combustion d'un flux d'air via au moins une tubulure d'admission d'air (1) présentant un coude en amont de la chambre de combustion, relativement au sens du flux d'air, et d'un flux de carburant gazeux ayant une vitesse supérieure à celle du flux d'air, caractérisé en ce que le carburant gazeux est injecté au voisinage de la chambre de combustion suivant une direction oblique par rapport à la direction du flux d'air et du côté de l'intrados de la tubulure d'admission de façon à dévier le flux d'air carburé vers l'extrados de la tubulure d'admission (1) et réduire sensiblement sa section hydraulique avant sa rentrée dans la chambre de combustion.

2. Procédé selon la revendication 1, caractérisé en ce que le flux de carburant gazeux est admis par au moins un conduit (4) débouchant dans au moins une tubulure d'admission (1),

3. Système d'alimentation d'au moins une chambre de combustion (2) d'un moteur à combustion interne à allumage commandé fonctionnant en mélange pauvre, comprenant au moins une tubulure (1) d'admission d'un premier flux d'air débouchant dans la chambre de combustion par l'intermédiaire d'au moins une soupape d'admission (3), cette tubulure présentant un coude en amont de la chambre de combustion, relativement au sens du flux d'air, au moins un conduit (4) d'admission d'un flux de carburant gazeux débouchant dans la tubulure d'admission (1) au voisinage de la chambre de combustion, caractérisé en ce que le dit conduit d'admission (4) est tel que le flux de carburant gazeux soit injecté suivant une direction oblique par rapport à la direction du flux d'air et du côté de l'intrados de la tubulure d'admission de façon à dévier le flux d'air carburé vers l'extrados de la tubulure d'admission (1) et réduire sensiblement sa section hydraulique avant sa rentrée dans la chambre de combustion.

4. Système selon la revendication 3, caractérisé en ce qu'il comprend trois tubulures d'admission (1) débouchant sensiblement dans le même demi-cylindre.

5. Système selon la revendication 4, caractérisé en ce qu'il comprend un conduit (4) qui débouche dans la tubulure d'admission (1) placée entre les deux autres tubulures.

6. Système selon la revendication 4, caractérisé en ce qu'il comprend deux conduits (4) qui débouchent dans les tubulures d'admission (1) situées de part et d'autre de la troisième.

7. Système selon la revendication 4, caractérisé en ce qu'il comprend trois conduits (4) chacun débouchant dans une tubulure d'admission (1).

8. Système selon la revendication 3, caractérisé en ce qu'il comprend deux tubulures d'admission (1) débouchant dans un même demi-cylindre.

9. Système d'admission selon la revendication 3 ou 4, caractérisé en ce que la tubulure d'admission (1) présente un axe sensiblement hélicoïdal en amont de la chambre de combustion.

10. Système d'admission selon l'une des revendications 3 à 9, caractérisé en ce que l'axe du conduit (4), à proximité de son débouché dans la tubulure (1), est orienté de façon à diriger le carburant gazeux sensiblement parallèlement au plan de sa soupape (3).
